Europäisches Patentamt

(19) European Patent Office

Office européen des brevets

(11) Publication number : **0 206 586**
**B1**

# EUROPEAN PATENT SPECIFICATION

(45) Date of publication of patent specification :
07.03.90

(51) Int. Cl.⁵ : **G 21 C   3/32**, **F 16 L 37/00**

(21) Application number : 86304264.4

(22) Date of filing : 04.06.86

(54) **Double lock joint for attaching top nozzle to guide thimbles of nuclear fuel assembly.**

(30) Priority : 12.06.85 US 744082

(43) Date of publication of application :
30.12.86 Bulletin 86/52

(45) Publication of the grant of the patent :
·07.03.90 Bulletin 90/10

(84) Designated contracting states :
BE DE FR GB IT SE

(56) References cited :
EP—A— 0 073 728
EP—A— 0 140 588
FR—A— 2 493 024
US—A— 4 321 111

(73) Proprietor : WESTINGHOUSE ELECTRIC CORPORA-
TION
Westinghouse Building Gateway Center
Pittsburgh Pennsylvania 15235 (US)

(72) Inventor : Feild, Alexander, Littlejohn, Jr.
905 Parkview Drive
Pittsburgh Pennsylvania 15243 (US)

(74) Representative : van Berlyn, Ronald Gilbert
23, Centre Heights
London, NW3 6JG (GB)

## Description

The present invention relates generally to fuel assemblies for nuclear reactors and, more particularly, means for attaching the top nozzle of a fuel assembly to its guide thimbles.

In most nuclear reactors, the reactor core is composed of a large number of elongate fuel assemblies. Conventional designs of these fuel assemblies include a plurality of fuel rods and control rod guide thimbles held in an organized array by grids spaced along the fuel assembly and attached to the control rod guide thimbles. Top and bottom nozzles on opposite ends of the fuel assembly are secured to the guide thimbles which extend slightly above and below the fuel rods. At the top end of the fuel assembly, the guide thimbles are inserted into passageways formed in the adapter plate of the top nozzle and then are attached to the latter. The guide thimbles may each include an upper sleeve for attachment to the top nozzle.

During operation of a fuel assembly in a nuclear reactor, some of the fuel rods may develop cracks due primarily to internal stresses, and such cracks create a possibility for radioactive fission products to pass into the primary coolant of the reactor. Such fission products may also be released into a flooded reactor cavity during refueling operations or into the coolant circulated through pools where spent fuel assemblies are stored. Since the fuel rods are part of the integral assembly of guide thimbles attached and usually welded to the top and bottom nozzles, it is difficult to detect and remove failed rods.

Until recently, in order to gain access to fuel rods, it was necessary to remove the fuel assembly from the reactor core and then break the welds securing the nozzles to the guide thimbles. The destructive action necessary to break the welds often renders the fuel assembly unfit for further use in the reactor because of the damage done to both the guide thimbles and the nozzle, which damage prohibits rewelding.

In view of the high costs associated with replacing fuel assemblies, considerable interest has arisen in reconstitutable fuel assemblies. The general approach to making a fuel assembly reconstitutable is to provide it with a removable top nozzle. One early method of doing so involves severing the guide thimbles just below where they are welded to the adapter plate of the top nozzle, and then removing the top nozzle from the assembly. Before subsequently replacing the top nozzle on the guide thimbles, annular grooves are formed in the passageways of its adapter plate. Thereafter, the top nozzle is placed back onto the guide thimbles, and with the latter inserted into the adapter plate passageways, circumferential regions of the inserted end portions of the guide thimbles are bulged into the passageway grooves so as to secure the top nozzle to the guide thimbles.

An alternative approach to the above reconstitution method employs an attaching structure for removably mounting the top nozzle on the upper ends of the guide thimbles (see EP-A-140 588). This attaching structure comprises outer sockets formed in the adapter plate of the top nozzle, inner sockets formed on the upper ends of the respective guide thimbles, and locking tubes inserted in the inner sockets to maintain them in locking engagement with the outer sockets. Each outer socket is in the form of a passageway through the adapter plate which has an annular groove formed in the wall thereof. Each inner socket is in the form of an upper end portion of the guide thimble having an annular outward bulge which seats in the annular groove when the guide thimble end portion is inserted in the adapter plate passageway. A plurality of elongated axial slots are provided in the guide thimble upper end portion so as to permit inward elastic collapse of the slotted end portion and thereby permit insertion of the bulge into and withdrawal thereof from the circumferential groove in the passageway of the adapter plate. In this manner, the inner socket of the guide thimble is inserted into and withdrawn from locking engagement with the outer socket.

The locking tube is inserted, from above the top nozzle, into a locking position within the hollow upper end portion of the guide thimble forming the inner socket. When inserted in its locking position, the locking tube retains the bulge of the inner socket in locking engagement with the annular groove of the outer socket and thereby prevents the inner socket from being withdrawn from the outer socket. In order to prevent inadvertent escape of the locking tubes due to vibration or shock, it is customary to fixedly secure such tubes in their locking positions, such as by deforming peripheral regions thereof into locking engagement with the concave sides of the circumferential bulges on the inner sockets.

Notwithstanding the overall acceptability of the above-described approaches, they have the disadvantage of requiring that annular grooves be machined into the side walls of the passageways extending through the top nozzle adapter plate.

It is the principal object of the invention to eliminate this drawback, and the invention accordingly resides in a reconstitutable nuclear fuel assembly including at least one tubular guide thimble, a top nozzle having an adapter plate with at least one passageway therethrough, and structure for attaching and releasably locking the adapter plate to an upper end portion of the guide thimble, which end portion is withdrawably inserted in said passageway and is elastically compressible from a normal expanded state to a collapsed state, characterized in that said upper end portion of the guide thimble extends upwardly through said passageway and above an upper surface of the adapter plate, and said structure is a double-lock joint structure including an upper retaining means and a lower retaining means both disposed on said upper end portion and axially spaced apart so as to be located directly above and below, respectively, said upper surface and a lower surface of the adapter plate, said upper retaining means protruding from said upper end portion diametrically a distance corresponding to a diameter which exceeds the inner diameter of said passageway when the end portion is in said expanded state and which is less than said inner diameter when the end portion is in said collapsed state, and said lower retaining means protruding from said upper end portion diametrically a distance corresponding to a diameter which exceeds the inner diameter of said passageway when said upper end portion is in either of its expanded and collapsed states.

The double lock joint structure as defined above eliminates the need for machining annular grooves into the side walls of the adapter plate passageways. In addition, it provides a tight and strong connection between the top nozzle and the guide thimbles since the double lock joint has excellent axial strength and resistance to transverse loading. Furthermore, it permits easy insertion and removal of the guide thimbles and locking tubes and exhibits superior joint alignment and protection against joint slippage.

The double lock joint structure includes also a locking tube which is removably inserted in the upper end portion of the guide thimble to maintain said upper end portion in the expanded state thereof, said locking tube having upper and lower protrusions which radially project therefrom to form interference fits with inner wall portions of said upper end portion located at said upper and lower retaining means.

A preferred embodiment of the invention will now be described, by way of example only, with reference to the accompanying drawings, in which :

Figure 1 is a side elevational view, with parts partially sectioned and broken away for the purpose of clarity, of a reconstitutable fuel assembly embodying the invention ;

Fig. 2 is a sectioned, exploded view of a double lock joint structure according to the invention ;

Fig. 3 is an enlarged sectional view taken along line 3-3 of Fig. 2 ;

Fig. 4 is an enlarged sectional view taken along line 4-4 of Fig. 2 ; and

Fig. 5 is a sectional view showing the double lock joint structure of Fig. 2 fully assembled.

In the following description, like reference characters designate like or corresponding parts throughout the several views, and terms such as « forward », « rearward », « left », « right », « upwardly », « downwardly », and the like are employed as words of convenience not to be construed as limiting terms.

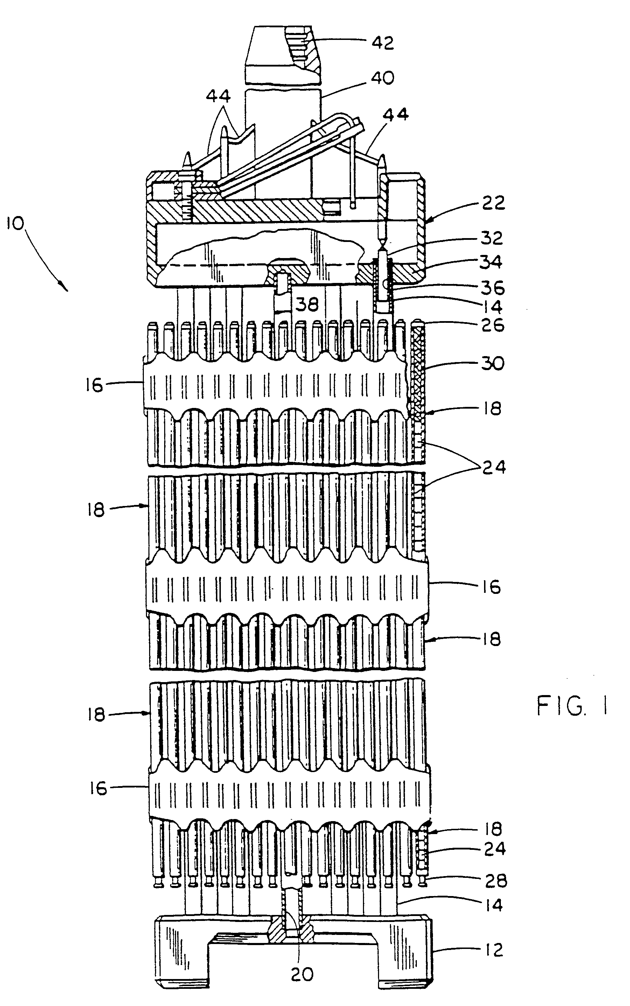

Referring now to the drawings, and particularly to Fig. 1, the reconstitutable nuclear fuel assembly illustrated therein in vertically foreshortened form and generally designated with reference numeral 10 comprises a lower end structure or bottom nozzle 12 for supporting the assembly on the lower core plate (not shown) in the core region of a nuclear reactor, guide tubes or thimbles 14 which extend upwards from the bottom nozzle 12, transverse grids 16 axially spaced along the guide thimbles 14, an organized array of elongate fuel rods 18 transversely spaced and supported by the grids 16, an instrumentation tube 20, and an upper end structure or top nozzle 22 removably attached to the upper ends of the guide thimbles 14 to form an integral assembly capable of being handled without damage to its counterpart parts.

Each of the fuel rods 18 contains nuclear fuel pellets 24 and has its opposite ends hermetically sealed by means of end plugs 26, 28. A plenum spring 30 disposed between the upper end plug 26 and the pellets 24 maintain the latter firmly stacked. The fuel pellets 24 composed of fissile material are the source of reactive power generated in the nuclear reactor, and a liquid moderator/coolant such as water, or water containing boron, is pumped upwardly through the fuel assemblies of the core in order to extract the heat generated therein for the production of useful work.

The fission process is controlled by means of control rods 32 which are reciprocally movable in guide thimbles 14 at predetermined locations within the fuel assembly 10. The top nozzle 22 has a lower adapter plate 34 with a plurality of passageways 36 (only one is shown) formed therethrough, and with upper end portions 38 of the guide thimbles coaxially positioned within the respective passageways 36. Associated with the top nozzle 22 is a rod cluster control mechanism 40 including an internally threaded cylindrical member 42 with radial flukes or arms 44, each of which is connected to one or more control rods 32 for moving same upon activation of the control mechanism 40.

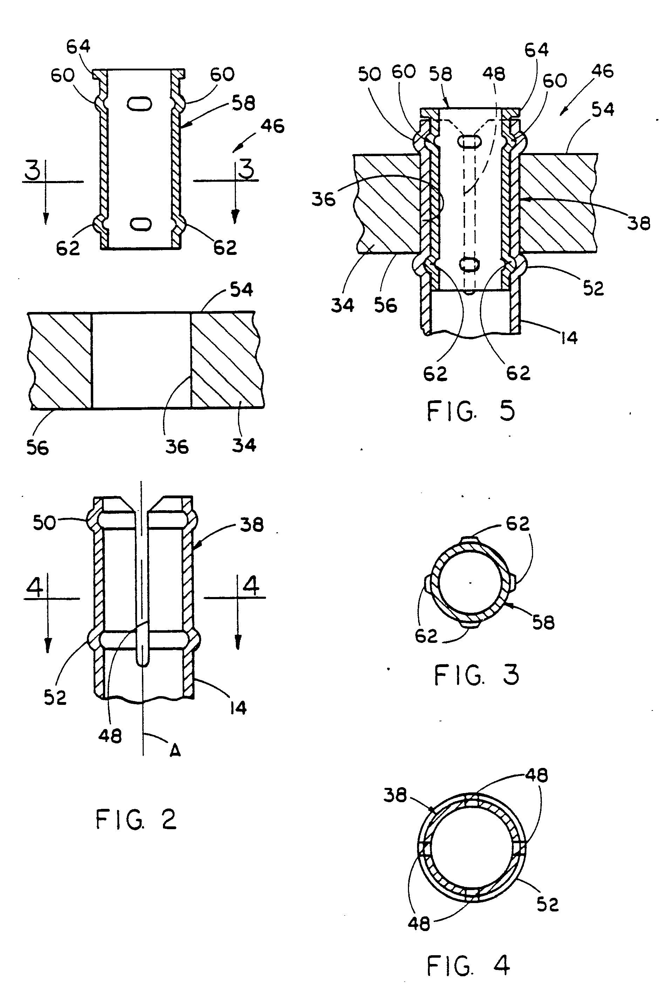

Referring now to Figs. 2 to 5, they show the features of the invention which form a double lock joint structure, generally designated 46, for releasably connecting the adapter plate 34 of the top nozzle 22 to the upper end portions 38 of the guide thimbles 14.

As illustrated therein, the double lock joint structure 46 for any one of the guide thimbles comprises elongate slots 48 formed longitudinally in the upper end portion 38 of the guide thimble 14 so as to permit elastic collapse thereof to a compressed state upon application of sufficient forces directed radially inward toward the longitudinal axis A of the upper end portion 38, which latter will elastically return to its expanded or non-compressed state when said forces are removed. These forces are imposed on the upper end portions 38 of the guide thimbles 14 whenever the top nozzle is being mounted in place and the guide thimble end portions 38 are entering the respective passageways 36 in the adapter plate 34.

The joint structure 46 also includes upper and lower retaining means preferably in the form of axially spaced annular bulges 50, 52 formed by bulged-out circumferential portions of the upper end portion 38 of the thimble 14. The upper annular bulge 50 has an outer diameter larger than the inner diameter of the associated adapter plate passageway 36 when the guide thimble upper end portion 38 is in its normal or expanded state. Of course, upon insertion of the thimble end portion into and withdrawal thereof from the adapter plate passageway 36, the upper bulge 50 is elastically compressed to assume an outer diameter less than the inner diameter of the adapter plate passageway 36. The annular bulge 52 has an outer diameter which is greater than the inner diameter size of the adapter plate passageway 36 when the guide thimble upper end portion 38 is in either its expanded or its collapsed state. The annular bulges 50 and 52 are axially spaced apart a distance substantially equal to the distance between top and bottom surfaces 54, 56 of the adapter plate 34 so that, when the upper end portion 38 of the guide thimble 14 is inserted through the adapter plate passageway 36, the adapter plate 34 is captured between the upper and lower annular bulges 50, 52 or, in other words, the guide thimble upper end portion 38 is locked to the adapter plate 34.

The joint structure 46 includes further a locking tube 58 removably insertable into the guide thimble upper end portion 38 to a locking position therein in which to maintain the thimble upper end portion in its expanded position and the adapter plate 34 thus captured between the two annular bulges 50, 52. Removal of the locking tube 58 from its locking position of course allows the upper end portion 38 to assume its collapsed state when compressed upon removal of the adapter plate 34 therefrom.

For securing the locking tube 58 in its locking position within the upper end portion 38 of the guide thimble 14, it is provided with axially and circumferentially displaced protrusions 60, 62 in the form of discrete protuberances adapted to mate with the concave sides of the annular bulges 50, 52 of the guide thimble upper end portion 38 and thereby form interference fits therewith. Furthermore, the tube 58 is provided with an annular flange 64 which is located above the upper protuberance 60 and facilitates gripping of the locking tube for insertion and removal thereof into and from the guide thimble upper end portion 38.

Although the bulges 50, 52 on the thimble end portion 38 are shown herein as extending completely around the upper end portion 38, it will be understood that they need not be continuous portions and that each could take the form of a series of short segments similar to the protuberances 60, 62 of the locking tube 58. It will also be understood that, if the bulges 50, 52 are virtually continuous, as illustrated, the upper and lower protuberances 60, 62 on the locking tube 58 likewise could take the form of annular bulges extending circumferentially all around the locking tube.

## Claims

1. A reconstitutable nuclear fuel assembly including at least one tubular guide thimble, a top nozzle having an adapter plate with at least one passageway therethrough, and structure for attaching and releasably locking the adapter plate to an upper end portion of the guide thimble, which end portion is withdrawably inserted in said passageway and is elastically compressible from a normal expanded state to a collapsed state, characterized in that said upper end portion (38) of the guide thimble (14) extends upwardly through said passageway (36) and above an upper surface (54) of the adapter plate (34), and said structure is a double-lock joint structure (46) including an upper retaining means (50) and a lower retaining means (52) both disposed on said upper end portion (38) and axially spaced apart so as to be located directly above and below, respectively, said upper surface (54) and a lower surface (56) of the adapter plate, said upper retaining means (50) protruding from said upper end portion (38) diametrically a distance corresponding to a diameter which exceeds the inner diameter of said passageway (36) when the end portion (38) is in said expanded state and which is less than said inner diameter when the end portion is in said collapsed state, and said lower retaining means (52) protruding from said upper end portion (38) diametrically a distance corresponding to a diameter which exceeds the inner diameter of said passageway (36) when said upper end portion is in either of its expanded and collapsed states.

2. A reconstitutable nuclear fuel assembly according to claim 1, characterized in that said double-lock joint structure (46) includes a locking tube (58) removably inserted in said upper end portion (38) of the guide thimble (14) to maintain said upper end portion in the expanded state thereof, said locking tube having upper and lower protrusions (60, 62) which radially project therefrom to form interference fits with inner wall portions of said upper end portion (38) located at said upper and lower retaining means (50, 52).

3. A reconstitutable nuclear fuel assembly according to claim 2, characterized in that said upper protrusions (60) are discrete protuberances spaced apart circumferentially about the locking tube (58).

4. A reconstitutable nuclear fuel assembly according to claim 2 or 3, characterized in that said lower protrusions (62) are discrete protuberances spaced apart circumferentially about the locking tube (58).

5. A reconstitutable nuclear fuel assembly according to claim 1, 2, 3 or 4, characterized in that said upper retaining means (50) comprises an annular bulge formed by a bulged-out circumferential portion of said upper end portion (38) of the guide thimble (14).

6. A reconstitutable nuclear fuel assembly according to claim 1, 2, 3, 4 or 5, characterized in that said lower retaining means (52) comprises an annular bulge formed by a bulged-out circumferential portion of said upper end portion (38) of the guide thimble (14).

7. A reconstitutable nuclear fuel assembly according to claim 2, 3 or 4, characterized in that said upper and lower retaining means (50, 52) comprise two annular bulges formed by bulged-out circumferential portions of said upper end portion (38) of the guide thimble (14), said upper and lower protrusions (60, 62) disengageably mating with the respective bulged-out circumferential portions at the concave sides thereof.

8. A reconstitutable nuclear fuel assembly according to claim 2, 3, 4, 5, 6 or 7, characterized in that said locking tube (58) has a radial gripping flange (64) disposed adjacent the upper end thereof.

**Patentansprüche**

1. Ein wiederherstellbarer Kernbrennstoffsatz mit mindestens einer röhrenförmigen Führungsmuffe, einer oberen Düse mit einer mindestens einen Durchlass aufweisenden Adapterplatte sowie einer Einrichtung zum Anbringen und lösbaren Befestigen der Adapterplatte an einem oberen Endstück der Führungsmuffe, wobei das Endstück ausziehbar in den Durchlass eingesetzt und aus einem expandierten in einen entspannten Zustand elastisch verformbar ist, dadurch gekennzeichnet, dass das obere Endstück (38) der Führungsmuffe (14) nach oben durch den Durchlass (36) und über eine obere Fläche (54) der Adapterplatte (34) ragt, und die Einrichtung als Doppel-Verbindungsstück (46) mit einer oberen Halterung (50) und einer unteren Halterung (52) gestaltet ist, die beide am oberen Endstück (38) und in einem solchen axialen Abstand voneinander angeordnet sind, dass sie unmittelbar über der oberen Fläche (54) bzw. der unteren Fläche (56) der Adapterplatte liegen, wobei die obere Halterung (50) vom oberen Endstück (38) diametral soweit vorsteht, dass ihr Durchmesser grösser ist als der Innendurchmesser des Durchlasses (56), wenn das Endstück (38) expandiert ist, jedoch kleiner ist als dieser Innendurchmesser, wenn das Endstück entspannt ist, und die untere Halterung (52) vom oberen Endstück (38) diametral soweit vorsteht, dass ihr Durchmesser grösser ist als der Innendurchmesser des Durchlasses (36), wenn das obere Endstück im expandierten oder entspannten Zustand ist.

2. Ein wiederherstellbarer Kernbrennstoffsatz nach Anspruch 1, dadurch gekennzeichnet, dass das Doppel-Verbindungsstück (46) ein Verriegelungsrohr (58) aufweist, das lösbar in das obere Endstück (38) der Führungsmuffe (14) eingesetzt ist, um das obere Endstück in seinem expandierten Zustand zu halten, wobei das Verriegelungsrohr obere und untere Vorsprünge (60, 62) aufweist, die radial vom Rohr abstehen und feste Paßsitze mit Innenwandteilen des oberen Endstückes (38) bilden, die sich an den oberen und unteren Halterungen (50, 52) befinden.

3. Ein wiederherstellbarer Kernbrennstoffsatz nach Anspruch 2, dadurch gekennzeichnet, dass die oberen Vorsprünge (60) einzelne im Abstand voneinander am Umfang des Verriegelungsrohres (58) angeordnete Ausstülpungen sind.

4. Ein wiederherstellbarer Kernbrennstoffsatz nach Anspruch 2 oder 3, dadurch gekennzeichnet, dass die unteren Vorsprünge (62) einzelne, im Abstand voneinander am Umfang des Verriegelungsrohres (58) angeordnete Ausstülpungen sind.

5. Ein wiederherstellbarer Kernbrennstoffsatz nach Anspruch 1, 2, 3 oder 4, dadurch gekennzeichnet, dass die obere Halterung (50) aus einer ringförmigen Wulst besteht, die durch eine um den Umfang des oberen Endstückes (38) der Führungsmuffe (14) laufende Ausbauchung gebildet ist.

6. Ein wiederherstellbarer Kernbrennstoffsatz nach Anspruch 1, 2, 3, 4 oder 5, dadurch gekennzeichnet, dass die untere Halterung (52) aus einer ringförmigen Wulst besteht, die durch eine um den Umfang des oberen Endstückes (38) der Führungsmuffe (14) laufende Ausbauchung gebildet ist.

7. Ein wiederherstellbarer Kernbrennstoffsatz nach Anspruch 2, 3 oder 4, dadurch gekennzeichnet, dass die obere und die untere Halterung (50, 52) zwei ringförmige Wulste aufweisen, die durch um Umfangsbereiche des oberen Endstückes (38) der Führungsmuffe (14) laufende Ausbauchungen gebildet sind, wobei die oberen und unteren Vorsprünge (60, 62) lösbar in die Konkavseiten der entsprechenden ausgebauchten umlaufenden Teile eingreifen.

8. Ein wiederherstellbarer Kernbrennstoffsatz nach Anspruch 2, 3, 4, 5, 6 oder 7, dadurch gekennzeichnet, dass das Verriegelungsrohr (58) an seinem oberen Ende einen radial abstehenden Halteflansch (64) aufweist.

**Revendications**

1. Assemblage combustible nucléaire reconstituable comportant au moins une chaussette de guidage tubulaire, un embout supérieur ayant une plaque d'adaptation avec au moins un passage à travers celle-ci, et une structure pour fixer et pour verrouiller de façon libérale la plaque d'adaptation à une partie d'extrémité supérieure de la chaussette de guidage, laquelle partie d'extrémité est insérée de façon à pouvoir être retirée dans ledit passage et est élastiquement compressible d'un état dilaté normal à un état comprimé, caractérisé en ce que ladite partie (38) d'extrémité supérieure de la chaussette de guidage (14) s'étend vers le haut à travers ledit passage (36) et au-dessus d'une surface supérieure (54) de la plaque d'adaptation (34), et en ce que ladite structure est une structure (46) de joint à double verrouillage comportant des moyens (50) de maintien supérieur et des moyens (52) de maintien inférieur disposés tous deux sur ladite partie (38) d'extrémité supérieure et axialement espacés l'un de l'autre de façon à être localisés directement au-dessus et en dessous, respectivement, de ladite surface supérieure (54) et d'une surface inférieure (56) de la plaque d'adaptation, lesdits moyens (50) de maintien supérieur faisant diamétralement saillie à partir de ladite partie (38) d'extrémité supérieure d'une distance correspondant à un diamètre qui dépasse le diamètre intérieur dudit passage (36) lorsque la partie d'extrémité (38) est dans ledit état dilaté, et qui est inférieur audit diamètre intérieur lorsque la partie d'extrémité est dans ledit état comprimé, et lesdits moyens (52) de maintien inférieur faisant diamétralement saillie depuis ladite partie (38) d'extrémité supérieure d'une distance correspondant à un diamètre qui dépasse le diamètre intérieur dudit passage (36) lorsque ladite partie d'extrémité supérieure est dans l'un de ses états dilaté et comprimé.

2. Assemblage combustible nucléaire reconsti-tuable selon la revendication 1, caractérisé en ce que ladite structure (46) de joint à double verrouillage comporte un tube de verrouillage (58) inséré de façon amovible dans ladite partie (38) d'extrémité supérieure de la chaussette de guidage (14) afin de maintenir ladite partie d'extrémité supérieure dans l'état dilaté de celle-ci, ledit tube de verrouillage ayant des saillies supérieure et inférieure (60, 62) qui s'étendent radialement à partir de celui-ci afin de former des joints serrés avec les parties de paroi intérieure de ladite partie (38) d'extrémité supérieure située dans lesdits moyens (50, 52) de maintien supérieur et inférieur.

3. Assemblage combustible nucléaire reconsti-tuable selon la revendication 2, caractérisé en ce que lesdites saillies supérieures (60) sont des protubérances discrètes espacées circonférentiel-lement l'une de l'autre autour du tube de verrouillage (58).

4. Assemblage combustible nucléaire reconsti-tuable selon la revendication 2 ou 3, caractérisé en ce que lesdites saillies inférieures (62) sont des protubérances discrètes espacées circonférentiel-lement l'une de l'autre autour du tube de verrouillage (58).

5. Assemblage combustible nucléaire reconsti-tuable selon la revendication 1, 2, 3 ou 4, caractérisé en ce que lesdits moyens (50) de maintien supérieur comportent un renflement annulaire formé par une partie circonférentielle renflée de ladite partie (38) d'extrémité supérieure de la chaussette de guidage (14).

6. Assemblage combustible nucléaire reconsti-tuable selon la revendication 1, 2, 3, 4 ou 5, caractérisé en ce que lesdits moyens (52) de maintien inférieur comportent un renflement annulaire formé par une partie circonférentielle renflée de ladite partie (38) d'extrémité supérieure de la chaussette de guidage (14).

7. Assemblage combustible nucléaire reconsti-tuable selon la revendication 2, 3 ou 4, caractérisé en ce que lesdits moyens (50, 52) de maintien supérieur et inférieur comportent deux renflements annulaires formés par des parties circonférentielles renflées de ladite partie (38) d'extrémité supérieure de la chaussette de guidage (14), lesdites saillies supérieure et inférieure (60, 62) s'accouplant de façon à pouvoir être libérées avec les parties circonférentielles renflées respectives dans les côtés concaves de celles-ci.

8. Assemblage combustible nucléaire reconsti-tuable selon la revendication 2, 3, 4, 5, 6 ou 7, caractérisé en ce que ledit tube de verrouillage (58) a un flasque de préhension radiale (64) disposé au voisinage de l'extrémité supérieure de celui-ci.

FIG. 1

FIG. 2

FIG. 5

FIG. 3

FIG. 4